# EUROPEAN PATENT APPLICATION

(11) **EP 4 462 366 A1**
(43) Date of publication of application: **13.11.2024**
(21) Application number: 23305756.1
(22) Date of filing: 12.05.2023
(51) Int. Cl.: G06T 11/00

(54) **DEVICES AND METHODS FOR AUGMENTED CT IMAGES GENERATION**

(71) Applicant: TheraPanacea, 75004 Paris (FR)
(72) Inventor: SCHMIDT-MENGIN, Marius, 75004 fr (FR); OUMANI, Ayoub, 75004 FR (FR)
(74) Representative: Icosa

(57) **Abstract**

The present invention relates to a device and computer-implemented method for obtaining an augmented CT generative model (31), and a device and a computer-implemented method for generating augmented CT images from acquired CT images, using the obtained augmented CT generative model (31), wherein said augmented CT generative model (31) is configured to generate augmented CT images with high quality from acquired CT images of poor quality.

## Description

### FIELD OF INVENTION

The present invention relates to the domain of image processing, more in detail to the field of processing of medical images. The present invention relates to devices and methods for generating augmented images, with high quality, starting from poor quality images.

### BACKGROUND OF INVENTION

Cone beam computed tomography (CBCT) is commonly used for in-room image guidance during radiation therapy, interventional radiology, computer assisted and robotic surgery. To date, its main usage is primarily devoted to assess and compensate for anatomopathological changes treatment implementation through direct correspondence with pre-operative/pre-treatment imaging. Despite being fast and versatile, CBCT has limitations such as low contrast, low signal to noise ratio, artifacts and the need for proper calibration to obtain accurate density values. This makes it difficult to properly align the patient with the (spiral) CT images used during the planning of radiotherapy treatments.

Another imaging technique, called Megavoltage CT (MVCT) - mostly used in the context of radiation therapy treatment delivery- allows to obtain images containing the body and bony structures which are suitable for setup verification and are currently used to provide daily clinical variation information to predict cancer prognosis and organs at risk (OAR) complications before each fractionated dose delivery. However, MVCT images, are characterized by amplified doping noise and lowered soft tissue contrast. Therefore, the low image quality of MVCT images not only increases the difficulty of depicting the variations of tumors and OAR, but also makes it hard to provide an accurate image registration for image guided radiotherapy (IGRT) and/or accurate delineation for adaptive radiotherapy (ART).

The problem of improving the quality of CBCT or MVCT images has been addressed in a number of previous works using deep neural networks under the concept of image-translation. CycleGAN architectures are widely used in the literature for the task of CBCT image quality enhancement. A CycleGAN uses an inverse transformation to constrain the model to learn a one-to-one mapping between two domains (CBCT and CT). This means that a CycleGAN not only learns a mapping from CBCT domain to CT domain but also the reverse mapping from CT domain to CBCT domain. This constraint is useful for quality enhancement but could be problematic for a number of other tasks such as artifact removal, as it somehow forces the CycleGAN to leave artifacts in the CT domain. In practice, it can be observed that artifacts are just partially hidden but not removed in the CycleGAN framework, in order for the backward generator to reconstruct the initial image.

In the presented context, the present invention proposes a method to improve the low resolution/signal-to-noise ratio quality of CT like images, such as CBCT and/or MVCT images, by reducing artifacts and correcting calibration errors and at the same time overcoming some of the disadvantages of the methods listed above.

### SUMMARY

This invention thus relates to a device for obtaining an augmented CT generative model, said augmented CT generative model being configured to generate augmented CT images from acquired CT images, said acquired CT images having poor quality, said device comprises:
- at least one input configured to receive at least one reference computer tomography (CT) image of a subject;
- at least one processor configured to construct a training dataset and, in a self-supervised manner, train a generative model using said training dataset, so as to obtain said augmented CT generative model trained to receive as input at least one acquired CT image and provide as output at least one augmented CT image, wherein constructing the training database comprises, for each at least one reference CT image:
   - performing a forward projection of said reference CT image simulating a cone-beam source geometry, so as to obtain a first ensemble of projections of said reference CT image;
   - obtaining a reduced ensemble of projections by removing from said first ensemble of projections at least one second ensemble of projections, said second ensemble of projections comprising projections obtained for at least two consecutive angles of forward projection;
   - performing a back projection of said reduced ensemble of projections to a 3D image space so to obtain a corrupted CT image; said corrupted CT image simulating a partial virtual acquisition, from a cone-beam CT scanner, comprising a reduce number of projections;
   and defining said training dataset as comprising said at least one corrupted CT image and the associated at least one reference CT image;
- at least one output configured to provide as output said augmented CT generative model trained to take as input acquired CT images and generate augmented CT images, with improved quality.

Advantageously the device of the present invention allows to obtain a trained generative model configured to transform poor quality CT images into augmented CT images with improved quality. The specific construction of the training dataset herein proposed advantageously allows to obtain a robust augmented CT generative model able to remove different types and intensities of noises and artifacts.

According to other advantageous aspects of the invention, the device comprises one or more of the features described in the following embodiments, taken alone or in any possible combination.

According to one embodiment, the at least one processor is further configured to add at least one first artifact to the reduced ensemble of projections, so as to simulate a ring artifact, by attributing a predefined value to at least one selected pixel on each projection of the reduced ensemble, said at least one selected pixel being the same for each projection.

According to one embodiment, pixels values of the at least one CT image are normalized in a predefined range of values, before the forward projection.

According to one embodiment, the at least one processor is further configured to add Poisson noise and/or Gaussian noise to each projection of the first ensemble of projections.

According to one alternative embodiment, the at least one processor is further configured to add Poisson noise and/or Gaussian noise to each projection of the reduced ensemble of projections.

According to one embodiment, the (untrained) generative model is trained using supervised generator loss function configured to optimize a distance between values of each pixel of the outputted augmented CT image and each corresponding pixel of the reference CT image of the training dataset; said reference CT image being associated to the corrupted CT image received as input during the training.

According to one embodiment, the processor is further configured to use a discriminator during the training of the generative model, wherein the discriminator loss function is configured to favor augmented CT images being closer to the reference CT images of the training dataset.

According to one embodiment, the generative model is a U-Net model.

According to one embodiment, the architecture of said U-Net model comprises the addition of gaussian noise in each pixel of each feature map following each convolution.

According to one embodiment, during the training of the generative model is used an Adam solver optimization algorithm.

According to one embodiment, each first ensemble of projections for one reference CT image comprises a random number of projections.

According to one embodiment, the at least one reference image is a spiral CT image, the at least one acquired CT image is a cone beam CT (CBCT) image or a Megavoltage CT (MVCT) image. Advantageously, the present invention allows to obtain a generated at least one augmented CT images having a quality comparable to a spiral CT image.

The present invention also relates to a computer-implemented method for obtaining an augmented CT generative model, said augmented CT generative model being configured to generate augmented CT images from acquired CT images, said acquired CT images having poor quality; said method comprising:
- receiving at least one reference CT image of a subject;
- constructing a training dataset and training, in a self-supervised manner, a generative model using said training dataset, so as to obtain said augmented CT generative model trained to receive as input at least one acquired CT image and generate as output at least one augmented CT image;
   wherein constructing the training database comprises:
   - perform a forward projection of said at least one CT image simulating a cone-beam source geometry, so as to obtain a first ensemble of projections of the at least one CT image;
   - obtaining a reduced ensemble of projections by removing from said first ensemble of projections at least one second ensemble of projections; said second ensemble of projections comprising projections obtained for at least two consecutive angles of forward projection;
   - perform a back projection of said reduced ensemble of projections to a 3D image space so to obtain at least one corrupted CT image; said at least one corrupted CT image simulating a partial virtual acquisition, from a cone-beam CT, comprising a reduce number of projections;
      defining said training dataset as comprising said at least one corrupted CT image and the at least one reference CT image;
- outputting said augmented CT generative model trained to take as input acquired CT images and generate an augmented CT images with improved quality.

The present invention further relates to a device for generating augmented CT images from acquired CT images, using an augmented CT generative model obtained from the device for obtaining an augmented CT generative model according to any one of the embodiments herein described; said device comprising:
- at least one input configured to receive at least one acquired CT images;
- at least one processor configured to provide said at least one acquired CT image to said augmented CT generative model so to generate at least one augmented CT image with improved quality;
- at least one output configured to provide said at least one augmented CT image.

In addition, the disclosure relates to a computer program comprising software code adapted to perform a method for obtaining an augmented CT generative model compliant with any of the above execution modes when the program is executed by a processor.

The disclosure also relates to a computer program comprising software code adapted to perform a method for generating augmented CT images from acquired CT images, using the augmented CT generative model of the present invention, compliant with any of the above execution modes when the program is executed by a processor.

The present disclosure further pertains to a non-transitory program storage device, readable by a computer, tangibly embodying a program of instructions executable by the computer to perform a method for obtaining an augmented CT generative model, compliant with the present disclosure.

The present disclosure also pertains to a non-transitory program storage device, readable by a computer, tangibly embodying a program of instructions executable by the computer to perform a method for generating augmented CT images from acquired CT images, using the augmented CT generative model of the present invention, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

### DEFINITIONS

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

**"Machine learning (ML)"** designates in a traditional way computer algorithms improving automatically through experience, on the ground of training data enabling to adjust parameters of computer models through gap reductions between expected outputs extracted from the training data and evaluated outputs computed by the computer models.

A **"hyper-parameter"** presently means a parameter used to carry out an upstream control of a model construction, such as a remembering-forgetting balance in sample selection or a width of a time window, by contrast with a parameter of a model itself, which depends on specific situations. In ML applications, hyper-parameters are used to control the learning process.

**"Datasets"** are collections of data used to build an ML mathematical model, so as to make data-driven predictions or decisions. In **"supervised learning"** (i.e. inferring functions from known input-output examples in the form of labelled training data), three types of ML datasets (also designated as ML sets) are typically dedicated to three respective kinds of tasks: **"training",** i.e. fitting the parameters, **"validation",** i.e. tuning ML hyperparameters (which are parameters used to control the learning process), and **"testing",** i.e. checking independently of a training dataset exploited for building a mathematical model that the latter model provides satisfying results.

A **"neural network (NN)"** designates a category of ML comprising nodes (called **"neurons"),** and connections between neurons modeled by **"weights".** For each neuron, an output is given in function of an input or a set of inputs by an **"activation function".** Neurons are generally organized into multiple **"layers",** so that neurons of one layer connect only to neurons of the immediately preceding and immediately following layers.

The above ML definitions are compliant with their usual meaning, and can be completed with numerous associated features and properties, and definitions of related numerical objects, well known to a person skilled in the ML field. Additional terms will be defined, specified or commented wherever useful throughout the following description.

**"Forward projection"** refers to the operation of computing the attenuation of x-rays during the passage through the body, represented in the 3D CT image, along the straight path from a source point to each detection element in a detector "screen" (2D) at each angle, which provides a set of N 2D projections of the same shape as the detector "screen", N being the number of angles of projection.

### BRIEF DESCRIPTION OF THE DRAWINGS

The present disclosure will be better understood, and other specific features and advantages will emerge upon reading the following description of particular and non-restrictive illustrative embodiments, the description making reference to the annexed drawings wherein:
**Figure 1** is a block diagram representing schematically a particular mode of a device for obtaining an augmented CT generative model, compliant with the present disclosure;
**Figure 2** is a flow chart showing successive steps executed with the device for obtaining an augmented CT generative model of figure 1;
**Figure 3** is a block diagram representing schematically a particular mode of a device for generating augmented CT images from acquired CT images, using an augmented CT generative model obtained from the device represented in Figure 1, compliant with the present disclosure;
Figure **4** is a flow chart showing successive steps executed with the device for generating augmented CT images from acquired CT images of figure 2;
**Figure 5A, 5B** and **5C** show three corrupted images obtained starting from the same reference CT image shown in Figure **5D****.**
**Figure 6A** shows a cone-beam CT image, **Figure 6B** shows an enhanced image used a prior art algorithm, and **Figure 6C** shows the augmented CT image obtained by transforming the image of figure 5A using the augmented CT generative model of the present invention.
**Figure 7A** shows an acquired CT image obtained with a cone-beam CT and **Figure 7B** shows the augmented CT image obtained by transforming the image of figure 7A using the augmented CT generative model of the present invention.

### ILLUSTRATIVE EMBODIMENTS

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

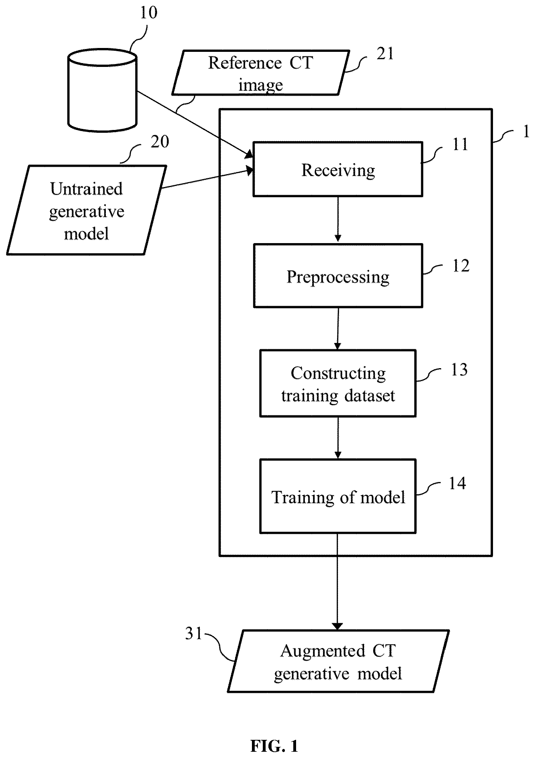

The present disclosure will be described in reference to a particular functional embodiment of a device 1 for obtaining an augmented CT generative model, as illustrated on Figure 1.

The device 1 is adapted to produce a trained generative model, that in the present disclosure is called augmented CT generative model 31, which is configured to receive as input acquired CT images 32, characterized by a low image quality, and generate as output augmented CT images 41, having an improved quality with respect to the input acquired CT images 32. Notably, the device 1 is configured to generate a training dataset and train a generative (learning) model 20 using said training dataset in order to obtain the augmented CT generative model 31. The device 1 may be configured to receive as input said training dataset (i.e.; from a database) or generate the training data set in a module for constructing the training dataset, but in both cases the training dataset is constructed from at least one, preferably multiple, references CT images 21.

In the present disclosure the acquired CT images 32 refer to images of a subject acquired from a computer tomography scan which are characterized by low image quality that may be due to different causes. For example, said poor image quality may be caused by (i) the use of a reduced number of projections (i.e.; 2D images) during the reconstruction of the CT image (i.e.; 3D image); (ii) miscalibration or failure of one or more of the detector elements in the CT scanner, which causes rings artifacts in the acquired CT image; (iii) photon noise; (iv) presence of metal or highly dense objects in the subject, which causes metal artifacts in the acquired CT image; (v) beam hardening; (vi) scattering; (vii) aliasing; (viii) subject motion during acquisition; and all others source of noise/artefacts/distortions known by the person skilled in the art.

Said acquired CT images 32 may be images acquired from a cone beam CT scanner, Megavoltage CT scanner or any other type of CT scanner producing poor quality and/or artifact in images with respect to a standard helicoidal CT scanner having correctly calibrated detector elements.

It has to be noticed that the acquired CT images 32 are not used by the device 1, notably they are not used in the generation of the training dataset nor in the training of the generative model.

The input data for the device 1 may be the reference CT images 21 and the untrained architecture of the generative model 20. In the present disclosure, the reference CT images 21 refer to high quality images of the subject acquired for example from a helicoidal CT scanner (e.g.; Siemens Sensation Open).

In this disclosure, the augmented CT images 41 refer to the images generated as output of the augmented CT generative model 31, which are characterized by a high image quality comparable to that of CT images obtained from helicoidal CT scanners.

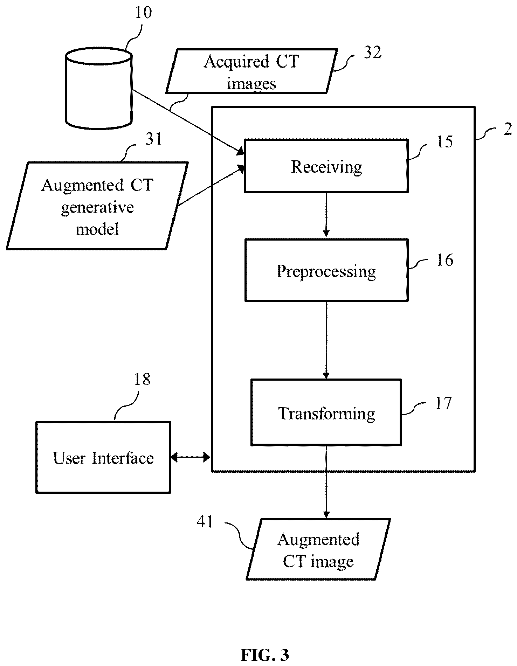

The device 1 for training the augmented CT generative model (i.e., training suited to setting the generative model parameters) is associated with a device 2, represented on Figure 3, for generating augmented CT images 41 from acquired CT images 32, using the augmented CT generative model 31 obtained from the device 1, which will be subsequently described.

Though the presently described devices 1 and 2 are versatile and provided with several functions that can be carried out alternatively or in any cumulative way, other implementations within the scope of the present disclosure include devices having only parts of the present functionalities.

Each of the devices 1 and 2 is advantageously an apparatus, or a physical part of an apparatus, designed, configured and/or adapted for performing the mentioned functions and produce the mentioned effects or results. In alternative implementations, any of the device 1 and the device 2 is embodied as a set of apparatus or physical parts of apparatus, whether grouped in a same machine or in different, possibly remote, machines. The device 1 and/or the device 2 may e.g. have functions distributed over a cloud infrastructure and be available to users as a cloud-based service, or have remote functions accessible through an API.

The device 1 for training and the device 2 for generating augmented CT images may be integrated in a same apparatus or set of apparatus, and intended to same users. In other implementations, the structure of the device 2 may be completely independent of the structure of the device 1, and may be provided for other users. For example, the device 2 may have a parameterized generative model available to operators for augmented CT image generation, wholly set from previous training effected upstream by other players with the device 1.

In what follows, the modules are to be understood as functional entities rather than material, physically distinct, components. They can consequently be embodied either as grouped together in a same tangible and concrete component, or distributed into several such components. Also, each of those modules is possibly itself shared between at least two physical components. In addition, the modules are implemented in hardware, software, firmware, or any mixed form thereof as well. They are preferably embodied within at least one processor of the device 1 or of the device 2.

The device 1 comprises a module 11 for receiving the reference CT images 21 and the untrained generative model 20, stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

The device 1 further comprises optionally a module 12 for preprocessing the received reference CT images 21. The module 12 may notably be adapted to standardize the received reference CT images 21 for sake of efficient and reliable processing, for example by normalizing the values of the voxels of the images.

The device may comprise a module 13 for the construction of the training dataset from the received at least one reference CT image 21 of one subject. Preferably, multiple reference CT images 21 acquired from multiple subjects are used in this module. The module 13 is configured to construct a training dataset comprising tridimensional CT images.

The module 13 is configured to perform a set of multiple operations on each one of the reference CT images 21 so as to obtain at least one associated corrupted CT image for each reference CT image 21. The reference CT images 21 and the at least one associated corrupted image forms a pair of aligned images to be included in the training dataset. Therefore, if that the device 1 receives *N* reference images 21, the module 13 iteratively performs on each reference image 21 said set of operations providing in the end *N* pairs of *i*^{th} reference image 21 - *i*^{th} associated corrupted image(s), i going from 1 to *N.*

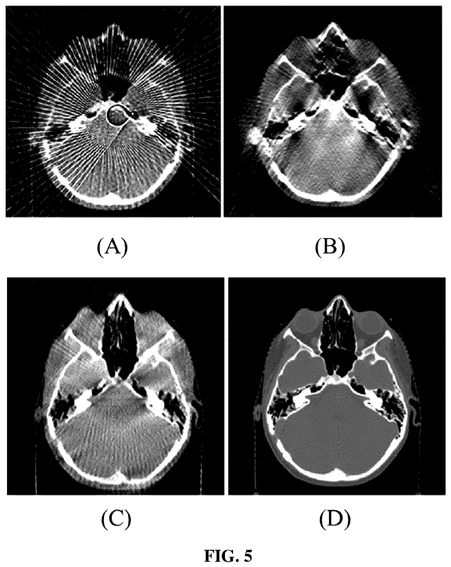

In one advantageous example, at least two, three or more corrupted CT images are obtained for one same reference CT image 21, as shown in Figure 5, wherein the reference CT image (Fig. 5D) has been corrupted in three different ways. In this example, Fig. 5A is mostly corrupted by aliasing and ring artifacts, Fig. 5B is mostly corrupted by noise, motion and beam hardening artifacts, Fig. 5C shows mostly aliasing, noise and beam hardening artifacts. This example allows to obtain a larger training dataset having *m* × *N* corrupted CT images, if *m* corrupted CT images (*m* = 1, ..., *M,* for *M* equal or superior to 2) are generated for each of the *N* reference CT image 21.

As first operation, the module 13 is configured to perform a forward projection of the *i*^{th} reference CT image 21, said forward projection being configured to simulate a CT scanner having a cone-beam source geometry. The result of this operation is a first ensemble of projections associated to said *i*^{th} reference CT image 21. Each projection is obtained by calculating a simulated attenuation of X-rays emitted by a simulated cone-beam source, passing through the voxels of the reference CT image 21 and reaching simulated detection elements. The projections are obtained using a rotation step comprised between 0 degrees to 360 degrees. In this way we pass from a 3D image (*i*^{th} reference CT image 21) to a group of 2D images (first ensemble of projections).

The number of projections, and therefore the rotation step, may be chosen randomly for each *i*^{th} reference CT image 21.

The second operation may be configured to produce a reduced ensemble of projections by removing at least one projection from the first ensemble. In one example, at least one second ensemble of projections is defined as comprising two or more projections obtained for two contiguous rotation steps (i.e.; angles) in the forward projection. Preferably, this second operation generates two or more second ensembles. In this example, the reduced ensemble of projections is obtained by removing the at least one second ensemble of projections from the first ensemble. Advantageously, this operation allows to mimic one main difference between low quality CBCT images and (better quality) CT images, which is indeed the fact that CBCT images are reconstructed from a reduced number of projections than helicoidal CT images.

The third operation implement by the module 13 consists in a back projection of said reduced ensemble of projections to a 3D image space so to obtain a corrupted CT image (i.e.; 3D image). This newly constructed corrupted CT simulates (i.e., as a similar visual appearance) a 3D image obtained from a partial virtual acquisition, from a cone-beam CT, comprising a reduced number of projections.

In addition to the first, second and third operation described above, the reference CT images 21 may be optionally further "degraded" by performing additional operations.

For example, one optional operation performed by module 13 comprises adding at least one first (bidimensional) artifact to the reduced ensemble of projections. Said first artifacts may be configured to simulate a ring artifact characteristic of poor-quality 3D CT image. This additional operation consists in attributing a predefined value to at least one selected pixel on each projection of the reduced ensemble. The at least one selected pixel (i.e., saturated pixel) is selected randomly for each reference CT image and is the same pixel (*j, k*) for each projection of the reduced ensemble. Advantageously this embodiment allows to simulate ring artifacts in the corrupted CT image.

Another optional operation performed by the module 13 consists in adding Poisson noise and/or Gaussian noise to each projection of the first ensemble of projections, or alternatively to each projection of the reduced ensemble of projections. The Poisson and/or gaussian distribution parameters used to generated the noise are randomly chosen and variated between each *i*^{th} iteration (i.e.; reference CT image 21). Advantageously the addition of Poisson noise allows to simulate in the corrupted CT image the photon noise visible in CT images.

According to various configurations, the module 13 is adapted to execute only part or all of the above functions, in any possible combination, in any manner suited to the following processing stage. In one advantageous example, at least two of the operations, adding artifacts or noise, are implemented by the module 13 so as to generate corrupted CT images with heavy artifacts and high noise. It was found that inducing artifacts is essential to improve the power of the generative network to properly reconstruct poor quality acquired images (e.g.; CBCT or MVCT images). This aspect also contributes to improve the generalization capability of the generative model.

Finally, once the corresponding corrupted CT image has been constructed for each of the (input) reference CT images 21, the training dataset is constructed by comprising at least one, preferably multiple, pair(s) of reference CT image 21 and corresponding at least one corrupted CT image. Advantageously, the generated corrupted CT image(s) serve(s) as a paired image with the reference CT image. The images of each pair are perfectly aligned and therefore can be used in a self-supervised training setting (described below).

In one example, the training dataset may comprise as well as corrupted CT images, images that are real CBCT images (i.e., images acquired with a cone beam CT scanner) for more robustness. The use of real CBCT images is particularly advantageous in the embodiment of the present invention wherein a discriminator is used for the training of the generative model 20.

As described above, in an alternative embodiment, said training dataset, comprising N pairs of reference CT image and associated corrupted CT image, may have been previously constructed and the module 13 may be just configured to receive the already existing training dataset from any kind of appropriate storage means, which can be notably a RAM or an EEPROM (Electrically-Erasable Programmable Read-Only Memory) such as a Flash memory, possibly within an SSD (Solid-State Disk).

Advantageously, the training dataset of the present invention provides pairs of reference-corrupted images that are perfectly aligned, comprises corrupted CT images representing the worst cases scenario of low quality CT images, and these corrupted CT images comprise a wide range of types and amplitudes of artifacts as well as noises. The Applicant has found that these characteristics of the training dataset advantageously allow to obtain a trained augmented CT generative model 31 scoring high performances in terms of efficiency of removing noise and artifacts from the inputted acquired CT images 32, but also improving resolution of the outputted augmented CT images 41.

The device 1 further comprises a module 14 configured to train the generative model 20 using the training dataset constructed (or received) by the module 13. Due to the specific construction of the present training data set, wherein the images that will be the input of the trained generative model (i.e.; corrupted CT images, low quality images as the acquired CT images 32) are obtained from the desired output images (i.e.; reference CT images 21, higher quality images that the model is trained to mimic/generate), the training is intrinsically self-supervised.

The generative (learning) model 20, trained in module 14, is a neural network and may be a convolutional neural network or an attention based neural network, such as a transformer, or any neural network for which the last layer outputs an activate map that has the size of a 3D image.

In one example the generative (learning) model 20 is an architecture of a U-Net model, that may have a depth of 3 and 9 extension blocks in the bottleneck. A stochastic variation may be used by adding in the pixels of the features maps per-pixel gaussian noise after each convolution. This noise is scaled with a learnable per-channel scaling factor. Advantageously, adding gaussian noise allows to obtain augmented CT images (i.e., output images) sharper, in other words it allows to increase the texture (contrast) in the augmented CT images.

The module 14 trains the generative model 20 using a supervised generator loss function configured to optimize a distance between values of each pixel of the outputted augmented CT image 41 and each corresponding pixel of the reference CT image 21 of the training dataset, wherein the reference CT image 21 used to minimize the distance is the paired image of the corrupted CT image received as input during the training.

In one embodiment, the generative learning model 20 is trained with the training dataset alone; hence without the use of a discriminator (i.e., discriminative model), as in a GAN (Generative Adversarial Network) like architecture.

According to one alternative embodiment, the generative learning model 20 is trained using the training dataset with a discriminator. As discriminator may be used any classifier architecture, typically a convolutional neural network, configured to take as input a whole image (i.e., not patches) and classify it as real or fake. In one alternative example, the discriminator architecture may be a convolutional PatchGAN discriminator (i.e.; classifier), which classifies the patches of an input image as real or fake instead of the entire image, which is better for the reconstruction of local details in the image compared to a regular discriminator that classifies the whole image. The discriminator loss function used is configured to favor augmented CT images 41 which are closer to the reference CT images 21 of the training dataset.

The module 14 is further configured to perform optimization of the generative learning model 20 using a stochastic gradient descent algorithm such as for example an Adam solver algorithm, Stochastic Gradient Descendent (SGD), AdaGrad algorithm, or the like.

As discussed above the training dataset is constructed to comprise N pairs of CT images, which are 3D imaging data. Therefore, the augmented CT generative model of the present invention is configured to handle 3D imaging data. Advantageously the 3D context brings a more consistent reconstruction (i.e.; transformation) of the augmented CT image 41, across slices. It also adds more regulation to the training.

Therefore, once the training is completed, the module 14 is configured to output the trained augmented CT generative model 31. The augmented CT generative model 31 may then by stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk).

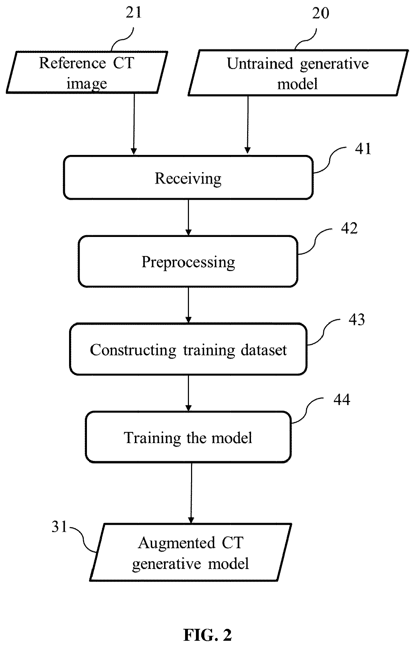

In its automatic actions, the device 1 may for example execute the following process (Figure 2):
- receiving the at least one reference CT image 21 of a subject (step 41),
- preprocessing the at least one reference CT image 21 (step 42),
- constructing the training dataset using the at least one reference CT image 21 (step 43),
- training the generative model 20 using the constructed training dataset (step 44).

The present invention also relates to a device 2 for generating augmented CT images 41 from acquired CT images 32, using the augmented CT generative model 31 obtained from the device 1, as described above. The device 2 will be described in reference to a particular function embodiment as illustrated in Figure 2.

The device 2 is adapted to receive as input the augmented CT generative model 31, already trained, and at least one acquired CT image 32. Said acquired CT image 32, as explained above, is a low quality CT image that a user wishes to improve in order to make it exploitable for various diagnostic and/or treatment tasks. The device 2 is adapted to provide as output at least one augmented CT image 41 obtained from the transformation of the at least one acquired CT image 32 performed by the augmented CT generative model 31. Therefore, the device 2 is configured to transform one low quality acquired CT image 32 into one augmented CT image 41, representing the same anatomical structures of the acquired CT image 32, but having improved quality.

The device 2 comprises a module 15 for receiving the augmented CT generative model 31 and the at least one acquired CT image 32, stored in one or more local or remote database(s) 10. The latter can take the form of storage resources available from any kind of appropriate storage means, which can be notably a RAM or an EEPROM (Electrically-Erasable Programmable Read-Only Memory) such as a Flash memory, possibly within an SSD (Solid-State Disk). In advantageous embodiments, the augmented CT generative model 31 and all its parameters have been previously generated by a system including the device 2 for training. Alternatively, the augmented CT generative model 31 and its parameters are received from a communication network.

The device 2 further comprises optionally a module 16 for preprocessing the received acquired CT images 32. The module 12 may notably be adapted to standardize the received acquired CT images 32 for sake of efficient and reliable processing, for example by normalizing the values of the voxels of the images. The acquired CT images 32 may be normalized in the same manner that the reference CT images 21.

The device 2 further comprises a module 17 configured to provide the acquired CT images 32 to said augmented CT generative model 31 so as to generate a corresponding augmented CT images 41 with improved quality.

The device 2 may interact with a user interface 18, via which information can be entered and retrieved by a user. The user interface 18 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

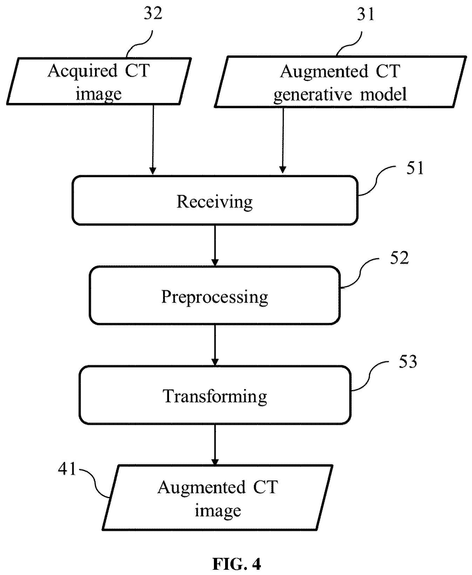

In its automatic actions, the device 2 may for example execute the following process (Figure 4):
- receiving the at least one acquired CT image 32 (step 51),
- preprocessing the at least one acquired CT image 32 (step 52),
- providing the preprocessed at least one acquired CT image 32 to said augmented CT generative model (31) so to generate at least one augmented CT image 41 with improved quality (step 53),

A particular apparatus may embody the device 1 as well as the device 2 described above. It corresponds for example to a workstation, a laptop, a tablet, a smartphone, or a head-mounted display (HMD).

That apparatus is suited to generation of augmented CT images and to related ML training. It comprises the following elements, connected to each other by a bus 95 of addresses and data that also transports a clock signal:
- a microprocessor (or CPU);
- a graphics card comprising several Graphical Processing Units (or GPUs) and a Graphical Random Access Memory (GRAM); the GPUs are quite suited to image processing, due to their highly parallel structure;
- a non-volatile memory of ROM type;
- a RAM;
- one or several I/O (Input/Output) devices such as for example a keyboard, a mouse, a trackball, a webcam; other modes for introduction of commands such as for example vocal recognition are also possible;
- a power source; and
- a radiofrequency unit.

According to a variant, the power supply is external to the apparatus.

The apparatus also comprises a display device of display screen type directly connected to the graphics card to display synthesized images calculated and composed in the graphics card. According to a variant, a display device is external to the apparatus and is connected thereto by a cable or wirelessly for transmitting the display signals. The apparatus, for example through the graphics card, comprises an interface for transmission or connection adapted to transmit a display signal to an external display means such as for example an LCD or plasma screen or a video-projector. In this respect, the RF unit can be used for wireless transmissions.

It is noted that the word "register" used hereinafter in the description of memories can designate in each of the memories mentioned, a memory zone of low capacity (some binary data) as well as a memory zone of large capacity (enabling a whole program to be stored or all or part of the data representative of data calculated or to be displayed). Also, the registers represented for the RAM and the GRAM can be arranged and constituted in any manner, and each of them does not necessarily correspond to adjacent memory locations and can be distributed otherwise (which covers notably the situation in which one register includes several smaller registers).

When switched-on, the microprocessor loads and executes the instructions of the program contained in the RAM.

As will be understood by a skilled person, the presence of the graphics card is not mandatory, and can be replaced with entire CPU processing and/or simpler visualization implementations.

In variant modes, the apparatus may include only the functionalities of the device 1, and not the learning capacities of the device 2. In addition, the device 1 and/or the device 2 may be implemented differently than a standalone software, and an apparatus or set of apparatus comprising only parts of the apparatus may be exploited through an API call or via a cloud interface.

### EXAMPLES

The present invention is further illustrated by the following examples.

### Example 1:

### Materials and Methods

For this example was used a U-Net, wherein stochastic variation is used by adding a per-pixel gaussian noise after each convolution. The noise is scaled with learnable per-channel scaling factors. An activation function was used a ReLu function.

The discriminator's architecture is based on a PatchGAN's discriminator. As activation function was used a LeakReLu function.

Concerning the optimization, the Adam solver is used with a batch size of 1, a learning rate of 0.001 and momentum parameters *β*₁ = 0.5 and *β*₂ = 0.999. Training samples are random patches of size (192,128,64). The optimization is done in two phases. A first one, without stochastic variation. When the L1 loss converges, the second phase is engaged with stochastic variation, all scaling factors being initialized to 1.

At inference time, the image to synthesize is clipped between -1024 and 1900 HU. For Elekta images, we first apply a linear calibration to align values at a standard CT range. The synthesized image is then obtained in a sliding window fashion, with a patch overlap of 50%.

### Results

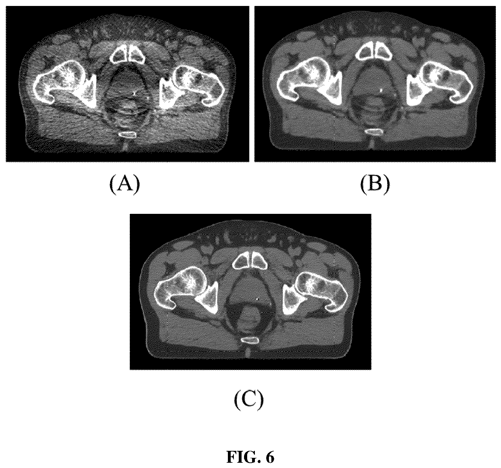

Figure 6 shows a first use case of application of the devices of the present example and its comparison with the results obtained with an algorithm of the prior art. Figure 6A shows the input image acquired with a CBCT, which has therefore a poor quality. Figure 6C shows the augmented CT image obtained from the transformation of the image of Fig. 6A using this exemplary configuration of the devices of the present disclosure. Figure 6B shows an enhanced image obtained with an algorithm of the prior art based on CycleGAN. Due to the lack of paired data, CycleGAN is widely used in the literature for the task of CBCT image quality enhancement. CycleGAN uses an inverse transformation to constrain the model to learn a one to one mapping between two domains. This means that CycleGAN not only learns a mapping from CBCT to CT but also the reverse mapping from CT to CBCT. This latter is unnecessary, but required for CycleGAN. This constraint is however problematic for artifact removal, as it somehow forces the CycleGAN to leave artifacts in the CT. In practice, it is observed that artifacts are just partially hidden but not removed in the CycleGAN framework, in order for the backward generator to reconstruct the initial image. For instance, on the Figure 6B, a ring artifact on the rectum is still partially visible on the CT image produced by cycleGAN of the prior art. Compared to the prior art algorithms, the present device shows betters artifacts removal capabilities and better generalization thanks to the wide range of artifacts induced in the training dataset.

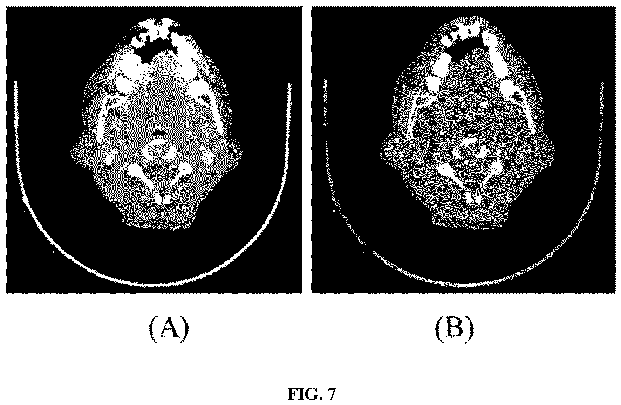

Figure 7 shows a second use case wherein the image acquired with a cone beam CT of Fig. 7A is transformed into the augmented CT image of Fig. 7B. It is clearly visible that the quality of the CBCT image is greatly improved thanks to the present device as, among others, the metal artifact due to a dental implant, is strongly reduced.

## Claims

1. A device (1) for obtaining an augmented CT generative model (31), said augmented CT generative model (31) being configured to generate augmented CT images (41) from acquired CT images (32), said acquired CT images (32) having poor quality, said device comprises:
- at least one input configured to receive at least one reference computer tomography (CT) image (21) of a subject;
- at least one processor configured to construct a training dataset and, in a self-supervised manner, train a generative model (20) using said training dataset, so as to obtain said augmented CT generative model (31) trained to receive as input at least one acquired CT image (32) and provide as output at least one augmented CT image (41),
wherein constructing the training database comprises, for each at least one reference CT image (21):
• performing a forward projection of said reference CT image (21) simulating a cone-beam source geometry, so as to obtain a first ensemble of projections of said reference CT image (21);
• obtaining a reduced ensemble of projections by removing from said first ensemble of projections at least one second ensemble of projections, said second ensemble of projections comprising projections obtained for at least two consecutive angles of forward projection;
• performing a back projection of said reduced ensemble of projections to a 3D image space so to obtain a corrupted CT image; said corrupted CT image simulating a partial virtual acquisition, from a cone-beam CT scanner, comprising a reduce number of projections;
and defining said training dataset as comprising said at least one corrupted CT image and the associated at least one reference CT image (21);
- at least one output configured to provide as output said augmented CT generative model (31) trained to take as input acquired CT images (32) and generate augmented CT images (41) with improved quality.

2. The device (1) according to claim **1,** wherein the at least one processor is further configured to add at least one first artifact to the reduced ensemble of projections, so as to simulate a ring artifact, by attributing a predefined value to at least one selected pixel on each projection of the reduced ensemble, said at least one selected pixel being the same for each projection.

3. The device (1) according to either one of claims **1** or **2,** wherein pixels values of the at least one CT image (21) are normalized in a predefined range of values, before the forward projection.

4. The device (1) according to any one of claims **1** to **3,** wherein the at least one processor is further configured to add Poisson noise and/or Gaussian noise to each projection of the first ensemble of projections, or alternatively to each projection of the reduced ensemble of projections.

5. The device (1) according to any one of claims **1** to **4,** wherein the generative model (20) is trained using supervised generator loss function configured to optimize a distance between values of each pixel of the outputted augmented CT image (41) and each corresponding pixel of the reference CT image (21) of the training dataset; said reference CT image (21) being associated to the corrupted CT image received as input during the training.

6. The device (1) according to any one of claims **1** to **5,** wherein the processor is further configured to use a discriminator during the training of the generative model (20), wherein the discriminator loss function is configured to favor augmented CT images (41) being closer to the reference CT images (21) of the training dataset.

7. The device (1) according to any one of claims **1** to **6,** wherein the generative model (20) is a U-Net model.

8. The device (1) according to claim **7,** wherein the architecture of said U-Net model comprises the addition of gaussian noise in each pixel of each feature map following each convolution.

9. The device (1) according to any one of claims **1** to **8,** wherein for training the generative model (20) is used an Adam solver optimization algorithm.

10. The device (1) according to any one of claims **1** to **9,** wherein each first ensemble of projections for one reference CT image comprises a random number of projections.

11. The device (1) according to any one of claims **1** to **10,** wherein the at least one reference image (21) is a spiral CT image, the at least one acquired CT image (32) is a cone beam CT (CBCT) image or a Megavoltage CT (MVCT) image, and the generated at least one augmented CT images (41) has a quality comparable to a spiral CT image.

12. A device (2) for generating augmented CT images (41) from acquired CT images (32), using an augmented CT generative model (31) obtained from the device according to any one of claims **1** to **11;** said device comprising:
- at least one input configured to receive at least one acquired CT image (32);
- at least one processor configured to provide said at least one acquired CT image (32) to said augmented CT generative model (31) so to generate at least one augmented CT image (41) with improved quality;
- at least one output configured to provide said at least one augmented CT image (41).

13. The device (2) of claim **12,** wherein the least one acquired CT image (32) is a cone beam CT (CBCT) image or a Megavoltage CT (MVCT) image.

14. A computer-implemented method for obtaining an augmented CT generative model (31), said augmented CT generative model (31) being configured to generate augmented CT images (41) from acquired CT images (32), said acquired CT images (32) having poor quality; said method comprising:
- receiving at least one reference computer tomography (CT) image (21) of a subject;
- constructing a training dataset and training, in a self-supervised manner, a generative model (20) using said training dataset, so as to obtain said augmented CT generative model (31) trained to receive as input at least one acquired CT image (32) and generate as output at least one augmented CT image (41);
wherein constructing the training database comprises:
• perform a forward projection of said at least one CT image (21) simulating a cone-beam source geometry, so as to obtain a first ensemble of projections of the at least one CT image (21);
• obtaining a reduced ensemble of projections by removing from said first ensemble of projections at least one second ensemble of projections; said second ensemble of projections comprising projections obtained for at least two consecutive angles of forward projection;
• perform a back projection of said reduced ensemble of projections to a 3D image space so to obtain at least one corrupted CT image; said at least one corrupted CT image simulating a partial virtual acquisition, from a cone-beam CT, comprising a reduce number of projections;
• defining said training dataset as comprising said at least one corrupted CT image and the at least one reference CT image (21);
- outputting said augmented CT generative model (31) trained to take as input acquired CT images (32) and generate an augmented CT images (41) with improved quality.

15. A computer program product comprising instructions which, when the program is executed by a computer, cause the computer to carry out the method of claim 14.
